# EUROPEAN PATENT SPECIFICATION

(11) **EP 2 106 853 B1**
(45) Date of publication and mention of the grant of the patent: **30.05.2018**
(21) Application number: 09151063.6
(22) Date of filing: 22.01.2009
(51) Int. Cl.: B01J 31/06, B01J 31/02, C11C 3/00

(54) **Homogeneous alkali polymeric gel catalyst (hapjek) that can be used for the production of fatty acid methyl ester**
Homogene alkalipolymerische Gelkatalysatoren (hapjek), die zur Herstellung von Fettsäuremethylester verwendet werden können
Gel polymere homogene de catalyseur alcalin (hapjek) qui peuvent être utilisés pour la production d'esters méthyliques d'acides gras

(30) Priority: 25.01.2008 TR 200800520
(43) Date of publication of application: 07.10.2009
(73) Proprietor: Tubitak, 06100 Ankara (TR)
(72) Inventor: Unsal, Mehmet, PK 21 41470 Kocaeli (TR); Gul, Omer Faruk, PK 21 41470 Kocaeli (TR); Atac, Ozlem, PK 21 41470 Kocaeli (TR); Karahan, Seyma, PK 21 41470 Kocaeli (TR)

(56) References cited:
- WO-A-2007/022621
- WO-A-2007/071046
- WO-A-2007/111604

## Description

### Subject of the Invention

Fossil fuels especially, coal, oil and natural gas, have a primary importance for the industry. However, fossil fuels are limited, nonrenewable, polluting and toxic. It is estimated that world oil reserve will be depleted until 2036 or 2041, if the consumption rate is equal to the rate in last few decades.

Biodiesel is one of the renewable energy sources that can be considered as alternative to fossil fuels. Ester originated fuels which are derived from animal fats or vegetable oils, like rapeseed and soybean, via transesterification reaction using short chain alcohols are called as Biodiesel.

Biodiesel can be used as a fuel directly or as a blend at any ratio with petroleum diesel. Biodiesel or biodiesel-diesel blends can be used in a diesel engine directly or with some small modifications on the engine.

Biodiesel has the potential to be an important sector as an energy source. Its direct use in diesel engines, efficiency closed to petroleum diesel, easy derivation from animal and vegetable fats, environment friendly structure are the reasons encouraging this potential. Biodiesel sector also contributes to work force and economy of energy agriculture.

As biodiesel is produced from agricultural products which use CO₂ for photosynthesis, it has no contribution to carbon cycle and greenhouse gas effect. It can be considered as natural absorber for CO₂ emissions. Besides, it is proved that, Biodiesel usage supports lower CO, SO₂, PM and unburned HC emissions.

When air pollution and global warming are considered, only in US, 22 giga tones CO₂/year and 1.5 million tones SO₂/year is emitted into the atmosphere due to the use of fossil fuel in car engines. Because of environmental concerns and energy demand, renewable and clean energy sources are required instead of fossil fuels.

When compared to fossil diesel, biodiesel utilization has 50% less damage to ozone layer. Sulfur compounds which causes acid rains, are at negligible levels in biodiesel fuel. CO (toxic gas) amount due to biodiesel combustion is 50% less than of diesel combustion.

The disadvantage of biodiesel in terms of emissions is, NOₓ emissions show an increase during biodiesel or biodiesel-fossil diesel blends combustion in diesel engine. For instance, NOₓ emissions of fossil diesel (80%)-biodiesel (20%) blends are 2-11% higher than fossil diesel NOₓ emissions.

Nowadays, one of the most important research areas on renewable energy sources is Biodiesel. Catalyst and process development, equipment design and genetic studies to increase oil content of the plant are the main research areas to produce fatty acid methyl esters from animal and vegetable oils with high performance as an alternative fuel to petroleum diesel.

### State of the Art Technique

### 1. State of the Art Biodiesel Production

Transesterification of the oils is a known mechanism since mid 1800s. At the beginning, this method was used for the separation of glycerine for soap production. Methyl and ethyl esters were the by-products in this process. The basic process of transesterification is that, in the presence of a catalyst animal fats or vegetable oils react with an alcohol to produce glycerine and esters. In general homogeneous catalysts are being used in Biodiesel production technologies. However, these catalysts lead to some undesired reactions.

Batch biodiesel production process in general has a reaction time of 1-8 h and separation time is 8-16 h. Thus, time required for the production of 1 gallon biodiesel is approximately 24 hours. Some researchers reduced the process time.

In the US patent 5,354,878, Connelman et all., used refined and degummed oil in CD process. Catalytic transesterification reaction (alkali Catalyses) of oil with low molecular weight alcohols is carried out in serially connected 3 column reactors at a temperature of 100°C and under pressure. In this process, flow rate of alcohol and catalyst in first the column reactor is smaller than of separation of glycerine from the mixture. Then, reaction mixture from which glycerine was partially removed is transferred to second column reactor. At this step a large amount of glycerine is separated. Reaction mixture is transferred to the third column reactor and some amount of alcohol and catalyst is added into the mixture. From the third column, reaction mixture is transferred to a extraction column with water buffer solution where methanol, glycerin, soap and catalyst removal takes place. Biodiesel coming from extraction column is purified with water and is let phase separation. For the last step, residual water existing in biodiesel is evaporated.

In Lurgi Process, transesterification reaction takes place under atmospheric pressure and 60°C. Degummed and deacidified oil are required as raw material for this process. At the presence of catalyst refined oil and methanol react in a two-stage mixer-settler reactor. Since glycerine taken from the bottom of second mixer-settler reactor contains methanol and catalyst, it is fed back to the first mixer-settler reactor. Methanol contained in the glycerine taken from the bottom of first mixer-settler reactor is recycled via distillation. Biodiesel from the second reactor is washed with water to remove impurities. At the last stage, methyl ester is purified via distillation.

In Henkel process, biodiesel is produced from unrefined oil under 9000 kPa pressure and 240°C temperature. Excess methanol, catalyst and unrefined oil are heated to 240°C and transferred into the reactor. Then, unreacted methanol is removed from the media and recocered. Mixture is taken to separator and 90% of the glycerine is removed. Methyl ester is neutralized, washed with water and sent to distillation column for purification.

In all processes mentioned above, transesterification reaction takes place in the presence of homogeneous alkali catalyst and each the process has some disadvantages. One disadvantage of the alkali catalyzed transesterification is the precipitation process of glycerine. Both fatty acid alkyl esters and glycerine are soluble in methanol. After reaction, excess alcohol in the reaction media behaves as surfactant which leads to very long precipitation time for glycerine.

Another disadvantage of alkali catalyzed transesterification reaction is neutralizing the alkai reaction media by inorganic acid addition. In continuous processes additional equipment and in batch processes additional reaction time is required for this operation.

Washing biodiesel with distilled water to remove mono- and di-glyceride, glycerine, inorganic salt and soap from the product is another disadvantage of alkali catalyzed transesterification reaction. Water consumption is fairly high and purification of waste water is required

### 2. State of the Art Catalysts Technologies Being Used in Biodiesel Production

Homogeneous and heterogeneous catalysts are being used in fatty acid methyl ester production. Alkali catalysts like, acceptor agent, sodium hydroxide (NaOH) and potassium hydroxide (KOH) which are soluble in alcohol and can form their alcoxides are called homogenous catalysts. Among these catalysts especially sodium hydroxide (NaOH) is being used in several homogenous alkali catalyzed processes like CD Process, Henkel Process, Lurgi Process and BIOX process. Besides, several patents like US 6,489,496, US 6,965,043, US 6,174,501 include studies about utilization of sodium hydroxide catalyst (NaOH) in fatty acid methyl ester production. Acid-base reaction occurs when homogenous catalysts react with alcohols. Short chained alcohols which are weak acids and sodium hydroxide (NaOH) and potassium hydroxide (KOH) which are strong base react reversibly and form alcohol salts (alkali alcoxide). In this reaction by-product is water (H₂O). One disadvantage of alkali catalyzed reactions is presence of by-product water in the media. This reversible reaction continues during the fatty acid methyl ester production.

ROH + NaOH or KOH ⇄ RO⁻Na⁺ (or K⁺) + H₂O

Presence of water in the media supports saponification reaction during fatty acid methyl ester formation. This results as a reaction yield decrease in fatty acid alkyl ester production. Removal of soap from fatty acid methyl esters after transesterification reaction is achieved by precipitation of glycerine, acid neutralization and multi-stage distilled water washing processes. All these stages are hard and high-cost processes. Beside, purification of washing water requires additional processes and investment.

To minimize the saponification reaction, in general, metal alcoxide is used. In the US patent 4,895,989 Sandler et all. produced sodium alcoxide production via pervaporation process. In the study, alkali metal hydroxides and 1-6 carbon alcohols are mixed with a ratio of 1:2-1:10 and a temperature of 80-110°C and metal alcoxides are obtained. Water formed after reaction is removed via pervaporation process with a membrane consisting of polyvinyl alcohol. In the process, alcohol-water mixture which evaporates at 80-110°C is heated to 120°C and transferred to pervaporation membrane. Alcohol that can not pass trough membrane is condensed and fed back to the reaction system. It is mentioned that water passes trough the membrane and leaves the system. Disadvantages of this is process are, difficulty in applying pervaporation process in the industry, permeability and plugging problems in pervaporation membrane and high heating costs.

In the US patent 2005/0177088 A1, Balagopal et all. obtained metal alcoholate solution in an electrolytic process. According to this study, sodium metoxide contained in the methanol is produced using methanol and sodium hydroxide. Anodic solution cell contains sodium hydroxide and cathodic cell contains methanol. Both cells are separated with a NaSICON ceramic membrane which is sodium permeability selective under current. Reactions take place in anode and cathode are given below.
*Anode* :

   2*OH⁻* → 1/2*O*₂ + *H*₂*O* + 2*e⁻*
*Cathode* :

   2*CH*₃*OH* + 2*NaOH →* 2*NaOCH*₃ + *H*₂ +1/2*O*₂ + *H*₂*O*
*Total*:

   2*CH₃OH* + 2*NaOH →* 2*NaOCH₃* + *H*₂ +1/2*O*₂ + *H*₂*O*

The current intensity applied to the ceramic membrane is specified to be 100 mA/cm². It is demonstrated that a solution of 25-28 % by weight is obtained in this system. Permeability of the ceramic membrane and membrane plugging, cost of the energy consumption in electrolysis process, removal of water which is formed in electrolysis from the product, flammable and explosive characteristics of hydrogen formed in the reaction are disadvantages of this process.

In the US patent 5,262,133 Adams et all. developed a process in which sodium alcoholate is produced from amalgam and recycling of mercury from amalgam occurs. In this process, it is pointed out sodium methylate is separated from mercury in the presence of 1-4 carbon alcohols and amalgam tungsten carbide, high carbon containing iron, iridium, ruthenium and their mixture. The reaction of the process is:

2NaHg + ROH → 2NaOR + H₂ + 2Hg

Use of Hg, cost of separating mercury from the media, cost of energy consumption in electrolysis, environmental concerns because of mercury and flammable and explosive characteristics of hydrogen formed in the reaction are disadvantages of this process.

Buckholtz et all. in US patent 5,425,856 proved that, soil alkali alcoholates can be obtained by the electrochemical reaction of sodium and potassium salts with alcohols.

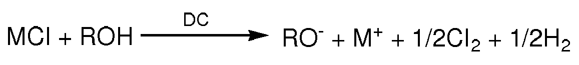

Here, M is Sodium or potassium, ROH is methanol, ethanol, propanol or butanol, DC is direct current. In this process sodium methylate is obtained via modified Hybinette cell which is between anode and cathode semi-cells. It is indicated that, cathode semi-cell contains methanol and sodium chloride solution, anode semi-cell contains methanol and when direct current applied on the system sodium alcoxide is obtained. While product sodium alcoxide is being sucked continuously from the system, sodium chloride is being fed to the system. It is defined that reaction occurs approximately at 130°C and under 30 kPa pressure. Cost of energy consumption in electrolysis, flammable and explosive characteristics of hydrogen formed in the reaction and cost of heating process in the electrolysis are disadvantages of this process.

The production of metal alcoxides is high-cost processes. Major disadvantage of metal alcoxides in fatty acid alkyl ester production process is that, they lead to saponification reaction with water present in the media during transesterification reaction. If oil contains water metal alcoxides are hydrolyzed to metal hydroxides and prefer saponification reaction. Neutralization caused by homogenous alkali catalyst and water washing requires additional equipment and processes like distillation of water present in the fatty acid alkyl ester after washing and purification of used water, thus additional investment and operation costs are needed.

Another catalyst dependent process in fatty acid methyl ester production is heterogeneous catalyzed process. Super acid and base specific polymeric compounds, organic compounds modified by impregnation as well as immobilized lipase as biological catalysts are such heterogeneous catalysts.

In a study by Stern et all. (US patent 5,908,946), 6-26 carbon animal fats and vegetable oils and 1-5 carbon short chain alcohols are transesterified at the presence of solid catalysts such as zinc oxide, zinc oxide-aluminum oxide and zinc oxide-zinc aluminates. Formulas of the solid catalyst are:

ZnAl₂O₄, xZnO, yAl₂O₃

X and y coefficients are between 0-2. Esterification reaction occurs in one or more steps. The reaction efficiency 97% when x=0.66 and y=1.81, rapeseed oil/methanol ratio 2:1 (v/v) at 235°C and under 50 bar pressure. Reaction products are; monoglyceride: 1.6%, diglyceride: 1.2%, triglyceride: 0.08%. Low reaction efficiency and high cost process due to the high temperature and pressure, neutralization of solid catalyst particles and/or ions released into the reaction media during transesterification are the disadvantages of the process. Moreover, composition of the product does not meet to EN 14214 standards.

Compared to the production processes of other catalysts, production of homogeneous alkali polymeric gel catalyst (HAPJEK) is simple. Except the cost of energy consumption of mixing and transfer equipment there is no other cost. HAPJEK provides a rapid tranesterification reaction, rapid precipitation of glycerine after transesterification and does not require neutralization and washing.

### Detailed Disclosure of the Invention

This invention is about a novel homogeneous catalyst (alkali polymeric gel catalyst (HAPJEK)) and production process of this catalyst which provides a shorter transesterification time (approximately 30 minutes) in fatty acid alkyl ester production, a very short glycerine precipitation time (approximately 10 minutes) and considerably reduces saponification level that occurs in sodium metoxide catalyzed transesterification reaction without any modification in reactor configuration. Through this invention, neutralization and washing processes which are used for purification of the product after fatty acid alkyl ester production with transesterification are not required. Moreover with this invention, fatty acid alkyl esters can be obtained from crude animal fats and vegetable oils without any refining process and from waste animal fats and vegetable oils without any filtration and purification processes. This invention, homogeneous alkali polymeric gel catalyst (HAPJEK), is a low cost product and comprises utilization of polyelectrolyte gel in fatty acid alkyl ester production with heterogeneous catalyst. Homogenous alkali polymeric gel catalyst is produced with a simple and basic technique. In the production procedure; short chain alcohol and alkali hydroxide (NaOH or KOH), together or separately, are mixed with polyelectrolyte gel (nonionic, cationic or anionic polyelectrolyte etc.). Short chain alcohols (methanol, ethanol, isopropyl alcohol, n-propyl alcohol, butanol) which are weak acids and sodium hydroxide (NaOH) and potassium hydroxide (KOH) which are strong base react reversibly and alcohol salts (alkali alcoxides) are formed. By-product water (H₂O) which leads to saponification reaction and effects transesterification reaction efficiency is held by polyelectrolyte gel (nonionic, cationic or anionic polyelectrolyte etc.) and reversible reaction turns out to be a one direction reaction favoring products. Besides, polyelectrolyte gel, (nonionic, cationic or anionic polyelectrolyte etc.) does not react with any substance in the reaction media. In transesterification reactions with HAPJEK, water (H₂O) present in the oil is also kept by polyelectrolyte gel (nonionic, cationic or anionic polyelectrolyte etc.) thus saponification reaction is restrained. In the reaction that oils and short chain alcohols react in the presence of HAPJEK, polyelectrolyte gel (nonionic, cationic or anionic polyelectrolyte etc.) flocks glycerine micro emulsions by surrounding them and blocks back reactions and accelerates the reaction. Another reason of reaction acceleration is impurity effect of flocculation. A very rapid glycerine precipitation is maintained due to flocculation. Moreover through flocculation, after reaction, metal alcoholates and soap molecules present in the reaction media get neutralized and precipitated with glycerine.

Flow diagram of alternative production processes of HAPJEK are given in the figures, which are:

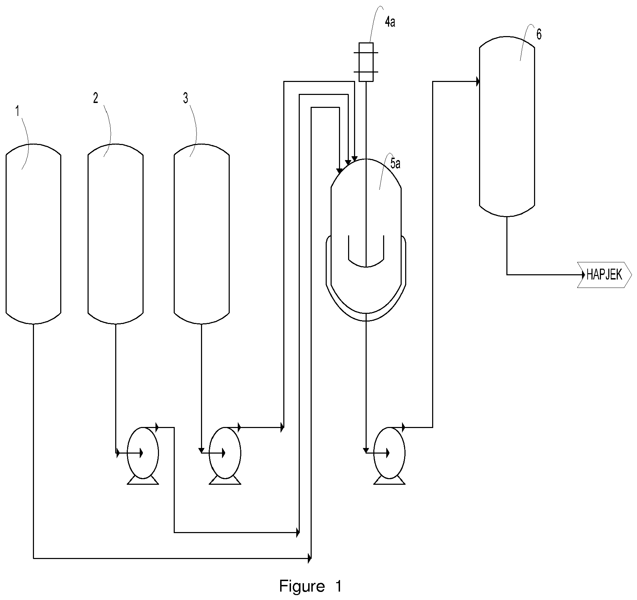

**Figure1****-** is the flow diagram of single stage HAPJEK production process and first batch production process of transesterification catalyst HAPJEK is shown. The characteristic of this process is use of 1. reactor (5a) for metal alcoxide obtainment. Sodium hydroxide (NaOH) or potassium hydroxide (KOH) taken from Sodium hydroxide (NaOH) or potassium hydroxide (KOH) tank (1) is transferred to 1. reactor (5a). Short chain alcohol is taken from alcohol tank (2) via a pump and transferred to the 1. reactor (5a). Polyelectrolyte gel taken from polyelectrolyte gel tank (3) via a pump is transferred to the 1. reactor (5a). 1. reactor is a stirred reactor and mixing rate should not exceed 700 rpm (preferably 500 rpm). Because the reaction is exothermic heating is not required in 1.reactor (5a). After approximately 5-30 minutes preferably 30 minutes mixing time, mixture is taken to HAPJEK storage tank (6) via a pump. HAPJEK is discharged from HAPJEK storage tank (6) for utilization.

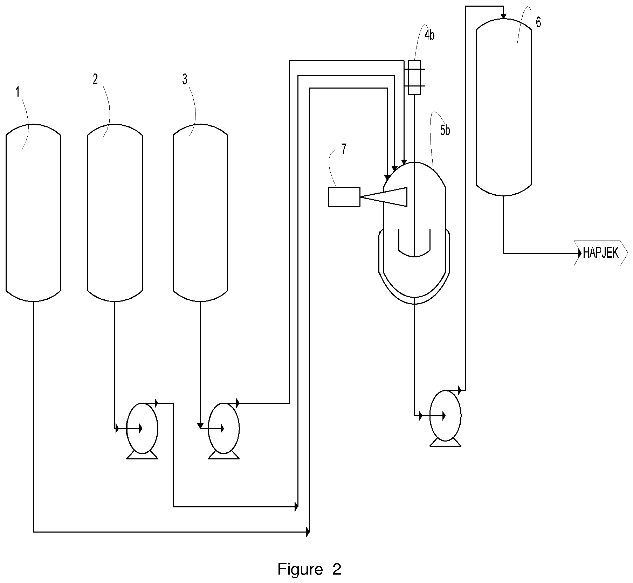

**Figure 2****-** is the diagram of single stage HAPJEK production when reactor (2. reactor) (5b) has a mixing with ultrasonic power supply. Process shown in Figure 2 is the batch production process of HAPJEK and the characteristic of this process is the utilization of ultrasonic power supply in additional to a stirred reactor to accelerate the metal alcoxide production reaction. Sodium hydroxide (NaOH) or potassium hydroxide (KOH) taken from Sodium hydroxide (NaOH) or potassium hydroxide (KOH) tank (1) is transferred to 2. reactor (5b). Short chain alcohol is taken from alcohol tank (2) via a pump and transferred to the 2. reactor (5b). Polyelectrolyte gel taken from polyelectrolyte gel tank (3) via a pump is transferred to the 2. reactor (5b). 2. reactor has a ultrasonic power supply (7). 2. reactor is a stirred reactor and mixing rate should not exceed 700 rpm (preferably 500 rpm). A 10-40 W/L ultrasonic power supply should be used. Because the reaction is exothermic heating is not required in 2.reactor (5b). After approximately 5-30 minutes preferably 15 minutes mixing time, mixture is taken to HAPJEK storage tank (6) via a pump. HAPJEK is discharged from HAPJEK storage tank (6) for utilization.

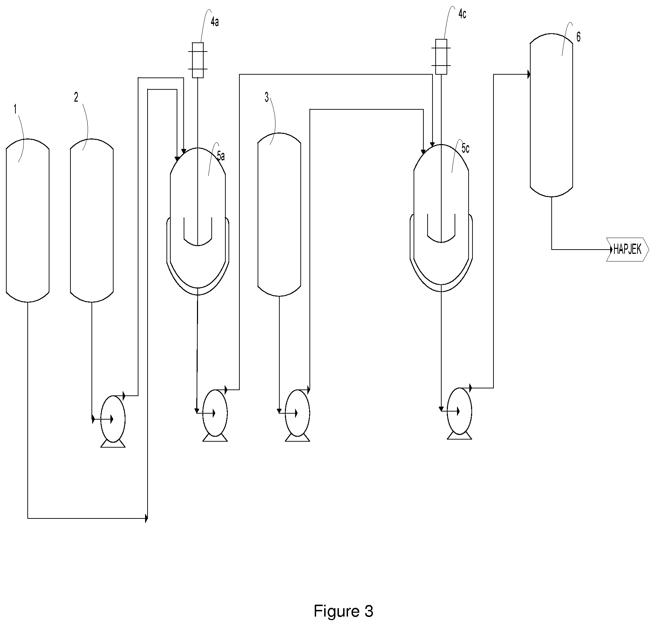

**Figure 3****-** is the diagram of continuous two stages HAPJEK production, at the first stage stirred reactor (5a) (1.reactor) configuration, at the second stage continuously stirred tank reactor (5c) (3. reactor) configuration. Sodium hydroxide (NaOH) or potassium hydroxide (KOH) taken from Sodium hydroxide (NaOH) or potassium hydroxide (KOH) tank (1) is transferred to 1. reactor (5a). Short chain alcohol is taken from alcohol tank (2) via a pump and transferred to the 1. reactor (5a). In the 1.reactor (5a) short chain alcohol and sodium hydroxide (NaOH) or potassium hydroxide (KOH) are mixed approximately 5-30 minutes (preferably 30 minutes) with 10-700 rpm mixing rate (preferably 500 rpm. Because the reaction is exothermic heating is not required in the reactor. After this process sodium metoxide or potassium metoxide solution is transferred to the continuously stirred 3.reactor (5c) via a pump from 1.reactor. Polyelectrolyte gel taken from polyelectrolyte gel tank (3) via a pump is transferred to the 3. reactor (5c). 3. reactor (5c) is a continuously stirred rector and mixing rate should not exceed 700 rpm (preferably 500 rpm). After approximately 5-30 minutes preferably 10 minutes mixing time, mixture is taken to HAPJEK storage tank (6) via a pump. HAPJEK is discharged from HAPJEK storage tank (6) for utilization.

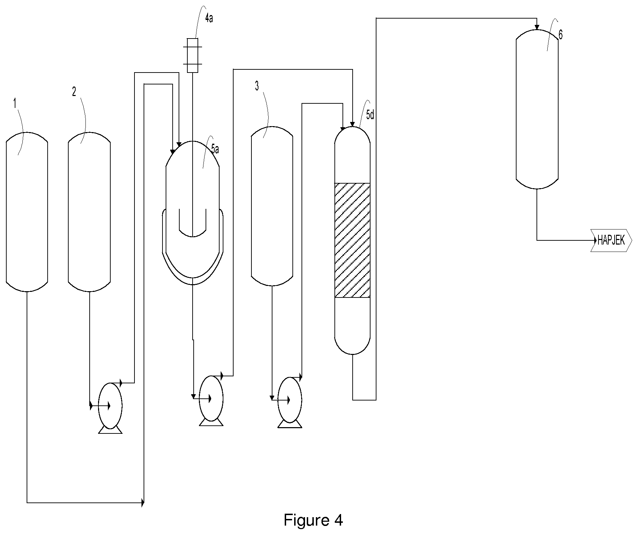

**Figure 4****-** is the diagram of two stages HAPJEK production, at the first stage stirred reactor (5a) (1.reactor) configuration, at the second stage piston flow reactor (4.reactor) (5d) configuration. Process described in Figure 4 is the continuous production process of HAPJEK and its characteristic is the utilization of piston flow reactor to reduce the production cost of metal alcoxide. Sodium hydroxide (NaOH) or potassium hydroxide (KOH) taken from Sodium hydroxide (NaOH) or potassium hydroxide (KOH) tank (1) is transferred to 1. reactor (5a). Short chain alcohol is taken from alcohol tank (2) via a pump and transferred to the 1. reactor (5a). In the 1.reactor (5a) short chain alcohol and sodium hydroxide (NaOH) or potassium hydroxide (KOH) are mixed approximately 5-30 minutes (preferably 30 minutes) with 10-700 rpm mixing rate (preferably 500 rpm. Since the reaction is exothermic heating is not required in the reactor. After this process sodium metoxide or potassium metoxide solution is transferred to the piston flow tube reactor 4.reactor (5d) via a pump from 1.reactor. Polyelectrolyte gel taken from polyelectrolyte gel tank (3) via a pump is transferred to the 4. reactor (5d). After 5-30 minutes (preferably 5 minutes) retention time in the 4. reactor (5d), mixture is taken to HAPJEK storage tank (6). HAPJEK is discharged from HAPJEK storage tank (6) for utilization

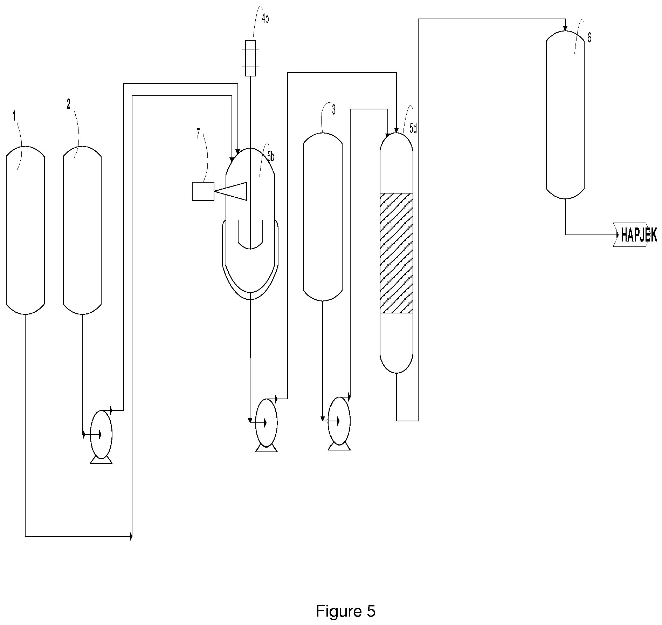

**Figure 5****-** is the diagram of two stages HAPJEK production, at the first stage stirred ultrasonic reactor (5b) (2.reactor) configuration, at the second stage piston flow reactor (4.reactor) (5d) configuration. Process described in Figure 5 is the continuous production process of HAPJEK and its characteristic is the utilization of piston flow reactor to reduce the production cost and utilization of ultrasonic power supply reactor (5b) (2.reactor) to accelerate the reaction to obtain metal alcoxide. Sodium hydroxide (NaOH) or potassium hydroxide (KOH) taken from Sodium hydroxide (NaOH) or potassium hydroxide (KOH) tank (1) is transferred to 2. reactor (5b). Short chain alcohol is taken from alcohol tank (2) via a pump and transferred to the 2. reactor (5b). 2.reactor (5b) has an ultrasonic power supply (7). In the 2. reactor (5b) short chain alcohol and sodium hydroxide (NaOH) or potassium hydroxide (KOH) are mixed approximately 15 minutes with 10-700 rpm mixing rate (preferably 500 rpm) and 10-40 W/L ultrasonic power mixing. Since the reaction is exothermic heating is not required in the reactor. After this process sodium metoxide or potassium metoxide solution is transferred to the piston flow tube reactor 4.reactor (5d) via a pump from 2.reactor (5b). Polyelectrolyte gel taken from polyelectrolyte gel tank (3) via a pump is transferred to the 4. reactor (5d). 4. reactor (5d) is a piston flow reactor and retention time of the fluid in this reactor is 5-30 minutes (preferably 5 minutes). HAPJEK produced in the 4. reactor (5d), is taken to HAPJEK storage tank (6). HAPJEK is discharged from HAPJEK storage tank (6) for utilization.

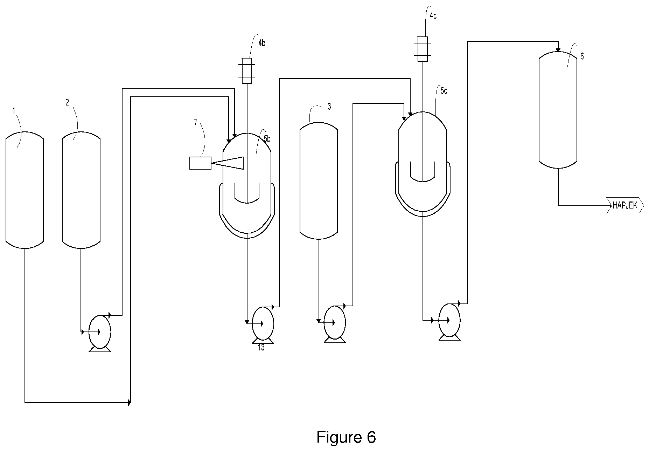

**Figure 6****-** is the diagram of two stages HAPJEK production, at the first stage stirred ultrasonic reactor (5b) (2.reactor) configuration, at the second stage continuously stirred reactor (3.reactor) (5c) configuration. Process described in Figure 6 is the continuous production process of HAPJEK and its characteristic is the utilization ultrasonic power supply additionally to the stirred reactor to accelerate the reaction to obtain metal alcoxide. Sodium hydroxide (NaOH) or potassium hydroxide (KOH) taken from Sodium hydroxide (NaOH) or potassium hydroxide (KOH) tank (1) is transferred to 2. reactor (5b). Short chain alcohol is taken from alcohol tank (2) via a pump and transferred to the 2. reactor (5b). 2.reactor (5b) has an ultrasonic power supply for mixing. In the 2. reactor (5b) short chain alcohol and sodium hydroxide (NaOH) or potassium hydroxide (KOH) are mixed approximately 30 minutes with 10-700 rpm mixing rate (preferably 500 rpm) and 10-40 W/L ultrasonic power mixing. Since the reaction is exothermic heating is not required in the reactor. After this process sodium metoxide or potassium metoxide solution is transferred to the 3.reactor (5c) via a pump from 2.reactor (5b). Polyelectrolyte gel taken from polyelectrolyte gel tank (3) via a pump is transferred to the 3. reactor (5c). 3. reactor (5c) is a stirred reactor and mixing rate should not exceed 700 rpm (preferably 500 rpm). After 5-30 minutes mixing time, preferably 10 minutes, the mixture is taken to HAPJEK storage tank (6) via a pump. HAPJEK is discharged from HAPJEK storage tank (6) for utilization.

Moreover this invention covers utilization of polyelectrolyte gel in fatty acid alkyl ester production with heterogeneous catalysts.

HAPJEK production is not restricted with the above described alternative production processes and it can be produced in different reactor combinations with utilization of same materials.

### Explanation of the Figures

1- Sodium hydroxide (NaOH) or potassium hydroxide (KOH) tank
2- Short chain alcohol (methanol, ethanol, propanol, isopropanol, butanol) tank
3- Polyelectrolyte gel (nonionic, cationic or anionic polyelectrolyte etc.) tank
4- Engine
   4a- Engine of the 1. Reactor (5a)
   4b- Engine of the 2. Reactor (5b)
   4c- Engine of the 3. Reactor (5c)
5- Reactor
   5a- 1.reactor: stirred rector
   5b- 2.reactor: Reactor with ultrasonic power supply mixing
   5c- 3.reactor: Continuously stirred tank reactor
   5d- 4.reactor: Piston flow reactor
6- HAPJEK storage tank
7- Ultrasonic power supply

### EXAMPLE 1.

In the process given in Figure 1, 4 kg NaOH, 77 kg methanol and 1,1 g PEG1450 are mixed with a rate of 500 rpm in the reactor (5) for 30 minutes. 350 kg refined rapeseed oil (MW: 882,76 kg/kmol, Acid value: 0,2 mg KOH/g oil, Iodine value: 104 g l/100 g oil, density: 0,9213 g/ml) is added to the media and mixture is stirred with a rate of 600 rpm at 55°C temperature. After 30 minutes reaction time, it is determined that reaction efficiency is 99%.

### EXAMPLE 2.

In the process given in Figure 2, 4 kg NaOH, 77 kg methanol and 1,1 g PEG1450 are mixed with a rate of 500 rpm and 40 W/L ultrasonic power in the reactor (5) for 15 minutes. Obtained HAPJEK solution is stirred at 55°C temperature, 600 rpm mixing rate with 350 kg refined rapeseed oil (MW: 882,76 kg/kmol, Acid value: 0,2 mg KOH/g oil, Iodine value: 104 g l/100 g oil, density: 0,9213 g/ml, Phosphorous content: 1 mg/kg). After 30 minutes reaction time, it is determined that reaction efficiency is 99%.

Some results of product analyze are given in Table1.

**Table1. Some analyze results of obtained fatty acid alkyl ester produced from crude oil**

| **Analyze Component** | **Value** |
|---|---|
| Mono-glyceride | %0,54 |
| Di- glyceride | %0,07 |
| Tri-glyceride | %0,1 |
| Free glycerol | %0,01 |
| Total Glycerol | %0,17 |
| Ester Content | %99 |
| Acid value | 0,185 mg KOH/g oil |
| Sodium (Na⁺) and Potassium (K⁺) Concentration | 1,27 mg/L |
| Calcium (Ca⁺⁺) and Magnesium (Mg⁺⁺) concentration | 0,81 mg/L |
| Total contamination | 12,7 mg/kg |
| Carbon Residue | % 0.020 |
| Phosphorous | 0,3 mg/kg |

### EXAMPLE 3.

In the process given in Figure 2, 77 kg methanol, 4 kg NaOH, and 1,1 g poly ethylene glycol 1450 are mixed with a rate of 500 rpm and 40 W/L ultrasonic power in the reactor (5) for 15 minutes. Obtained HAPJEK solution is stirred at 55°C temperature, 600 rpm mixing rate with 350 kg refined rapeseed oil (MW: 880,78 kg/kmol, Acid value: 3,14 mg KOH/g oil, Iodine value: 109 g l/100 g oil, density: 0,9199 g/ml, Phosphor content: 122 mg/kg). After 30 minutes reaction time, it is observed that reaction efficiency is 99,2%. Some results of product analyze are given in Table 2.

**Table 2. Some analyze results of obtained fatty acid alkyl ester produced from crude oil**

| **Analyze Component** | **Value** |
|---|---|
| Mono-glyceride | %0,66 |
| Di- glyceride | %0,11 |
| Tri- glyceride | %0,08 |
| Free glycerol | %0,01 |
| Total Glycerol | %0,2 |
| Ester Content | %99,2 |
| Acid value | 0,180 mg KOH/g oil |
| Sodium (Na⁺) and Potassium (K⁺) Concentration | 1,2 mg/L |
| Calcium (Ca⁺⁺) and Magnesium (Mg⁺⁺) concentration | 0,8 mg/L |
| Total contamination | 12,3 mg/kg |
| Carbon Residue | 0.018 % |

## Claims

1. A homogeneous alkali polymeric gel catalyst, to be used in transesterification of short chain alcohols with vegetable and animal oils, crude or refined oil, waste vegetable oils, **characterized in that** the catalyst comprises
a- as base; NaOH or KOH,
b- as alcohol: methanol, ethanol, isopropyl alcohol, n-propyl alcohol, butanol,
c- as polyelectrolyte gel; nonionic, anionic and cationic polyelectrolyte gel.

2. A method for producing the catalyst according to claim 1 **characterized in that**, the alcohol and the base, together or separately, are mixed with polyelectrolyte gel.

3. A method for producing the catalyst according to claim 2 wherein the production method is selected from batch process method or continuous process method.

4. A continuous process method for producing the catalyst according to Claim 3 which comprises the steps of
i. mixing base and alcohol in a reactor
ii. transferring of the mixture into a continuously stirred tank reactor
iii. addition of polyelectrolyte gel into the continuously stirred tank reactor
iv. transferring of the obtained mixture to the storage
to be able to produce catalyst with a continuous process.

5. A method according to Claim 2 comprising the use of piston flow reactor in continuous process method according to Claim 3 and in steps iii according to claim 4.

6. A method according to Claims 4 or 5 comprising the utilization of a reactor that has an ultrasonic power supply.

7. A batch process method for producing a catalyst according to Claim 3 which comprises transferring of the base taken from base tank, the alcohol taken from alcohol tank and the polyelectrolyte gel taken from polyelectrolyte gel tank into a batch reactor.

8. A batch process method for producing a catalyst according to Claim 7 comprising the utilization of a reactor that has an ultrasonic power supply.

9. A method according to claim 3 comprising the application of;
a- a stirred rector with a mixing rate not exceeding 700 rpm, preferably 500 rpm and a reaction time of 5-30 minutes, preferably 30 minutes
b- a reactor with ultrasonic power supply mixing with a mixing rate not exceeding 700 rpm, preferably 500 rpm, 10-40 W/L ultrasonic power and a reaction time of 15-30 minutes, preferably 15 minutes
c- a continuously stirred tank reactor with a mixing rate not exceeding 10-700 rpm, preferably 500 rpm, and a reaction time of 5-30 minutes, preferably 10 minutes
d- a piston flow reactor in which the reaction time of the fluid is 5-30 minutes, preferably 5 minutes.

## Patentansprüche

1. Ein homogener, alkalischer, polymerer Gel-Katalysator zur Verwendung bei der Umesterung kurzkettiger Alkohole bei pflanzlichen und tierischen Ölen, Rohöl oder raffiniertem Öl und pflanzlichen Altölen, der **dadurch gekennzeichnet ist, dass** der Katalysator folgendes beinhaltet:
a- als Base; NaOH oder KOH,
b- als Alkohol; Methanol, Ethanol, Isopropanol, *n*-Propanol, Butanol,
c- als polyelektrolytisches Gel; nichtionisches, anionisches und kationisches Polyelektrolytgel

2. Eine Methode zur Herstellung eines Katalysators gemäß Patentanspruch 1, die **dadurch gekennzeichnet ist, dass** der Alkohol und die Lauge gemeinsam oder getrennt mit polyelektrolytischem Gel vermischt werden.

3. Eine Methode zur Herstellung des Katalysators gemäß Patentanspruch 2, wobei die Produktionsmethode zwischen Batch- oder kontinuierlicher Verfahrensmethode ausgewählt wird.

4. Eine kontinuierliche Verfahrensmethode für die Herstellung eines Katalysators gemäß Patentanspruch 3, welche die Schritte der
i. Vermischung von Lauge und Alkohol in einem Reaktor,
ii. Umfüllung der Mischung in einen kontinuierlichen Rührtankreaktor,
iii. Hinzufügung von polyelektrolytischem Gel in den kontinuierlichen Rührtankreaktor und
iv. Umfüllung der gewonnenen Mischung zur Lagerung
umfasst, um einen Katalysator mit einem kontinuierlichen Prozess herstellen zu können.

5. Eine Methode gemäß Patentanspruch 2, welche die Verwendung eines Kolbenflussreaktors bei der kontinuierlichen Verfahrensmethode gemäß Patentanspruch 3 und in den Schritten iii gemäß Patentanspruch 4 umfasst.

6. Eine Methode gemäß Patentansprüchen 4 oder 5, welche die Nutzung eines Reaktors umfasst, der eine Ultraschall-Leistungsversorgung hat.

7. Eine Batch-Verfahrensmethode für die Herstellung eines Katalysators gemäß Patentanspruch 3, welcher die Umfüllung der Lauge aus dem Laugentank, des Alkohols aus dem Alkoholtank und des polyelektrolytischen Gels aus dem Polyelektrolytgeltank in einen Batch-Reaktor umfasst.

8. Eine Batch-Verfahrensmethode für die Herstellung eines Katalysators gemäß Patentanspruch 7, welche die Nutzung eines Reaktors mit einer Ultraschall-Leistungsversorgung umfasst.

9. Eine Methode gemäß Patentanspruch 3, welche folgende Anwendungen umfasst:
a- Ein Rührreaktor mit einer Mischgeschwindigkeit von maximal 700 rpm, vorzugsweise 500 rpm, und einer Reaktionszeit von 5 - 30 Minuten, vorzugsweise 30 Minuten.
b- Ein Reaktor mit Ultraschall-Leistungsversorgung mit einer Mischgeschwindigkeit von maximal 700 rpm, vorzugsweise 500 rpm, 10 - 40 W/L Ultraschall-Leistungsversorgung und einer Reaktionszeit von 15 - 30 Minuten, vorzugsweise 15 Minuten.
c- Ein kontinuierlicher Rührtankreaktor mit einer Mischgeschwindigkeit von maximal 10 - 700 rpm, vorzugsweise 500 rpm, und einer Reaktionszeit von 5 - 30 Minuten, vorzugsweise 10 Minuten.
d- Ein Kolbenstromreaktor, bei dem die Reaktionszeit der Flüssigkeit 5 - 30 Minuten beträgt, vorzugsweise 5 Minuten.

## Revendications

1. Catalyseur gel homogène polymérique alcalin, à utiliser dans la transestérification d'alcools à chaîne courte avec des huiles végétales et animales, de l'huile brute ou raffinée, des huiles végétales usagées, **caractérisé en ce que** le catalyseur comprend
a- comme base; NaOH ou KOH,
b- comme alcool; méthanol, éthanol, alcool isopropylique, alcool n-propylique, butanol,
c- comme gel polyélectrolyte; gel polyélectrolytique non ionique, anionique et cationique,

2. Une méthode de production d'un catalyseur selon la Revendication 1 **caractérisé en ce qu'**ils sont mélangés d'alcool et de base, ensemble ou séparément, avec un gel polyélectrolyte.

3. Une méthode de production du catalyseur selon la Revendication 2, dans lequel la méthode du procédé de production est choisi parmi le procédé par traitement de lots ou la méthode pour le procédé en continu.

4. Une méthode pour le procédé en continu pour produire un catalyseur selon la Revendication3, qui comprend les étapes de:
i- mélange de base et d'alcool dans un réacteur
ii- transfert du mélange dans un réacteur à réservoir sous agitation en continu
iii- ajout de gel polyélectrolyte dans le réacteur à réservoir sous agitation en continu
iv- transfert du mélange obtenu dans le stockage
être capable de produire un catalyseur avec un processus continu.

5. Une méthode selon la Revendication2, comprenant l'utilisation d'un réacteur à circulation en piston dans une méthode pour le procédé en continu selon la Revendication3 et dans les étapes iii de la Revendication4.

6. Une méthode selon les revendications 4 ou 5 comprenant l'utilisation d'un réacteur qui a une alimentation électrique à ultrasons.

7. Une méthode pour le procédé de traitement par lots pour produire un catalyseur selon la Revendication3, qui comprend le transfert de la base prise du réservoir de base, l'alcool prélevé du réservoir d'alcool et le gel polyélectrolyte prélevé du réservoir de gel polyélectrolyte dans un réacteur de lots.

8. Une méthode pour le procédé de traitement de lots pour produire un catalyseur selon la Revendication7, comprenant l'utilisation d'un réacteur qui a une alimentation électrique à ultrasons.

9. Une méthode selon la Revendication3 comprenant l'application de;
a- un recteur sous agitation avec une vitesse de mélange ne dépassant pas 700 tr/min, de préférence 500 tr/min et une durée de réaction de 5-30 minutes, de préférence 30 minutes
b- un réacteur à alimentation électrique à ultrasons mélangeant avec une vitesse de mélange ne dépassant pas 700 tr/min, de préférence 500 tr/min, puissance ultrasonore de 10-40 W/L et une durée de réaction de 15-30 minutes, de préférence 15 minutes
c- un réacteur à réservoir sous agitation en continu avec une vitesse de mélange ne dépassant pas 10-700 tr/min, de préférence 500 tr/min, et une durée de réaction de 5-30 minutes, de préférence 10 minutes
d- un réacteur à circulation en piston dans lequel le temps de réaction du fluide est de 5-30 minutes, de préférence 5 minutes.
